(19) **Europäisches Patentamt**

**European Patent Office**

**Office européen des brevets**

(11) **EP 0 882 101 B1**

(12) **EUROPEAN PATENT SPECIFICATION**

(45) Date of publication and mention
of the grant of the patent:
**10.05.2000  Bulletin 2000/19**

(51) Int Cl.7: **C09D 5/08**

(86) International application number:
**PCT/CA97/00120**

(21) Application number: **97903167.1**

(22) Date of filing: **21.02.1997**

(87) International publication number:
**WO 97/31069 (28.08.1997 Gazette 1997/37)**

(54) **CORROSION PREVENTING COVERING**

**KORROSIONSSCHUTZBESCHICHTUNG**

**REVETEMENT ANTICORROSION**

(84) Designated Contracting States:
**BE DE DK ES FI FR GB GR IT NL PT SE**

(30) Priority: **22.02.1996  GB 9603792**

(43) Date of publication of application:
**09.12.1998  Bulletin 1998/50**

(73) Proprietor: **SHAW INDUSTRIES LTD.**
**Rexdale Ontario M9W 1M7 (CA)**

(72) Inventors:
• **TAILOR, Dilip, K.**
**Brampton, Ontario L6Y 2T2 (CA)**
• **VERGE, Michael**
**Markham, Ontario L3P 5W8 (CA)**
• **STEELE, Robert, E.**
**Richmond Hill, Ontario L4C 3Z9 (CA)**
• **TATHGUR, Amarjit**
**Brampton, Ontario L6R 1T9 (CA)**
• **ANDRENACCI, Alfredo**
**Scarborough, Ontario M1V 2W5 (CA)**

(74) Representative: **Geering, Keith Edwin**
**REDDIE & GROSE**
**16 Theobalds Road**
**London WC1X 8PL (GB)**

(56) References cited:
**EP-A- 0 574 829**     **WO-A-92/11316**
**DE-A- 3 425 206**     **US-A- 4 421 569**

Remarks:
The file contains technical information submitted after the application was filed and not included in this specification

**Description**

Corrosion of metals is an electrochemical process which requires six primary elements in order to proceed:

1. An anode (metal with positive charge that will corrode).

2. A cathode (body with negative charge that will gain electrons and not corrode).

3. An electrolyte in which the anode and cathode are immersed. An electrolyte is a conductive solution in which the water molecules ($H_2O$) are ionized into hydrogen ion ($H^+$) and hydroxyl ions ($OH^-$). The soil moisture usually fulfils this condition.

4. A conductive path electrically connecting the anode and cathode. This could be the pipeline or other metal structure itself, or a wire connecting the two electrodes.

5. Oxygen.

6. A potential difference between the anode and cathode.

Once these conditions are met, an electrical current will flow and metal will be consumed at the anode. The complete corrosion reaction for iron may be represented as follows:

$$
\begin{array}{lllll}
 & & & & \underline{\text{Volts}} \\
2Fe \longrightarrow 2Fe^{++} & + & 4e^- & & 0.440 \\
O_2 + 2H_2O & + 4e^- & & 4(OH)^- & \underline{0.815} \\
\hline
2Fe + O_2 + & 2H_2O \longrightarrow 2Fe(OH)_2 & & & 1.255
\end{array}
$$

Corrosion occurs due to the escape of the two electrons from the iron atom. The electrons always obey the Ohms Law which describes how many electrons will move (i.e. current) when the potential difference (voltage) is a certain amount and the resistance is a certain amount. The mathematical relationship is:

$$I = \frac{E}{R}$$

where

- I is current in amperes
- E is electromotive force in volts
- R is the resistance in Ohms to be movement of the electrons

The law of chemical thermodynamics provides the mathematical relationship of the electrochemical reaction. This law says that to stop the 2 electrons from escaping from each iron atom (i.e. corrosion), the voltage (i.e. the driving force) between the anode and cathode must be reduced to a value less than zero volts.
To make the voltage less than zero, the iron must be made negative, or electron rich. This means that the iron is made into a cathode relative to some positively charged body. This principle is used in the cathodic protection of the iron or steel pipe.
This chemical law is described by the NERNST EQUATION and for the above reaction would be presented as follows:

$$E = \boxed{1.255} - \boxed{\frac{0.059}{4} \text{ Log } \frac{1}{[O_2]^2 \quad [H_2O]^2}}$$

Part I                                    Part II

E is the voltage, and the $[O_2]$ and $[H_2O]$ are the 'apparent' values for the concentration of oxygen and water in the corrosion cell at the corroding steel interface.

To barely stop the corrosion, the value of E must be brought to zero, or must be made negative to completely stop the corrosion.

One option available to a corrosion engineer is to work on the Part I of the equation by modifying the "cell environment potential" and making the E value negative. For submerged or buried structures, such as a pipeline, electrons can be forced back onto the steel with some form of voltage source. This could be a rectifier that applies an impressed current (sends excess electrons) to the steel, or it could be a sacrificial anode. These forms of cathodic protection systems are commonly used.

Part II of the equation shows the impact on corrosion control from the barrier quality of a coating. As oxygen $[O_2]$ and water $[H_2O]$ concentrations in the equation are reduced, the E value is rendered more negative. If a coating on the metal were to be totally impervious to water and oxygen, the E would be brought to a negative value.

Pipelines and other structures of steel or other metals that are vulnerable to corrosion have usually been protected by application of a water-resistant coating, for example, a polyolefin. These coatings have been considered a corrosion deterrent measure on the basis of the reduction of the concentration of water molecules at the metal surface.

Unexpectedly, it has been found that in some circumstances the water-resistant coating may not provide resistance to corrosion that is as effective as is desirable. The invention relates to corrosion resistant coverings that can provide considerably superior corrosion resistance. Further, it has been found that surprisingly, the coverings of the invention may provide corrosion protection even where the covering is pierced or perforated.

The invention provides a corrosion preventing covering comprising: at least two discrete organic polymeric layers directly or indirectly united together and wherein: [a] a first of said layers has a water vapour permeability of 0.005 to 10 g.mm/m$^2$/24h at 23°C, 100% RH; [b] a second of said layers has: (i) an oxygen permeability of 0.01 to 10 cm$^3$.mm/m$^2$/24h.atm at 23°C, 50% RH and/or (ii) a carbon dioxide permeability of 0.01 to 30 cm$^3$.mm/m$^2$/24h.atm at 23°C, 50% RH; and said covering having in aggregate: [c] a water vapour transmission rate of 0.05 to 0.6g/m$^2$/24h at 23°C; and [d] (i) an oxygen transmission rate of 0.01 to 10cm$^3$/m$^2$/24h.atm at 23°C and/or (ii) a carbon dioxide transmission rate of 0.01 to 20cm$^3$/m$^2$/24h at 23°C.

Prefered embodiments of the invention are described in the dependent claims.

The said first or predominantly water-resistant layer may serve to mechanically support or physically protect the said second or molecular barrier layer as well as serving to reduce transmission of water molecules from the environment to the surface of the article to which the covering is applied. The second or molecular barrier layer may serve to reduce transmission of undesirable molecules such as for example oxygen and carbon dioxide to the surface of the corrodible substrate. The barrier layer provides considerably greater resistance to corrosion in circumstances in which the water-resistant layer may in itself offer insufficient corrosion resistance, for example, where there is a damage to the covering or a void under the covering or poor adhesion between the covering and the substrate, as discussed in more detail below.

The covering may comprise a bonding layer serving to unite the covering firmly to the substrate to be protected.

The covering of the invention may provide considerably increased resistance to corrosion in circumstances in which a conventional water-resistant coating may provide inadequate corrosion resistance. For example, if the conventional coating has poor adhesion, or there is a void under the coating, then an open interface exists between the coating and the metal or substrate, and moisture vapour and gases can transfer into this area from the environment to equalize the pressure on either side of the coating. This can give rise to problems especially where the environment is subject to cycles of temperature change. When the temperature drops, any moisture can condense in this space, reducing the pressure, thus providing a pressure gradient tending to increase transmission of water and undesired molecules. When the temperature of the covering increases, the vapour can expand and with sufficient pressure, it can create a blister. Thus the size of blister can enlarge greatly with many temperature cycles over time, and diffusion of water, and oxygen, and other undesirable chemical species to the metal surface can increase substantially, leading to severe corrosion.

In one form, the covering of the invention may reduce the transmission of oxygen to the substrate to an extent that the corrosion process is greatly retarded even if the covering is perforated and water and salts are present at the surface of the corrodible metal. Ideally, to prevent corrosion, both water and oxygen would be excluded from the corrodible surface, but the high concentrations of water in most soils surrounding pipelines, for example, and the incidence of perforation damage especially to loosely applied coverings, favour water ingress to some degree, and therefore excluding the oxygen molecules by use of an oxygen barrier in the covering provides a highly effective corrosion protective covering system not known to date.

The tendency for water ingress is particularly evident where there is damage creating an opening in a coating, whereby all coatings are subject to some degree of cathodic disbondment, virtually guaranteeing a large and growing area of exposure to the electrolyte (soil water). As the leading edge of the disbondment becomes remote from exposed damage area, the protective cathodic currents cannot reach these remote edges. Consequently, the remote edge can develop a potential difference relative to the highly cathodic damage point and become an anode, which leads to the corrosion. For the corrosion to proceed in these remote edges, presence of oxygen molecules is critical, and can be readily transmitted through the conventional coatings which have relatively high oxygen permeability. The presence of an oxygen barrier prevents oxygen ingress through the coating to the remote regions which cannot be protected by cathodic protection system.

The second or molecular barrier layer may also or in the alternative be an effective barrier to carbon dioxide, thereby reducing or eliminating the incidence of carbon dioxide promoted stress corrosion cracking.

The layers and the coverings of the invention are characterized by two related but different criteria with respect to their ability to resist the passage of gas or water vapour through them.

Firstly, the layers are characterized by their permeability with respect to water vapour, oxygen and/or carbon dioxide. "Permeability" with respect to a given molecular species may be considered an absolute or intrinsic characteristic of the material constituting the layer. More specifically, the permeability of the layers used in the coverings of the invention may be defined as the proportionality constant P in the general equation for mass transport across a barrier.

$$\frac{AM}{\triangle T} = P \frac{(A \triangle p)}{L}$$

where

P = permeability of the barrier
$\frac{AM}{\triangle T}$ = the mass of a penetrant crossing a barrier per unit time (measured for example in grams or moles per second)
A = area of the barrier
L = thickness of the barrier
$\triangle p$ = partial pressure difference across the barrier

Organic polymers may be classified by the degree to which they restrict the passage of molecules, and various polymers are presented in Table 1 and Table 2 (taken from Kroschwitz, J.I., "Concise Encyclopedia of Polymer Science and Engineering" Wiley-Interscience Publishing) as lower barrier polymers and high barrier polymers respectively.

Table 3 provides comparative values of permeability using low density polyethylene (a typical water-resistant coating material) as a basis of comparison and arbitrarily assigned a permeability value of 1.

High barrier SARAN (Dow Chemicals trade mark for polyvinylidene chloride), hydrolyzed ethylene-vinyl acetate copolymers, high nitrile copolymers, rigid PVC, nylon (polyamide) and polyesters all have relatively good oxygen barrier properties compared to polyethylene, polypropylene, polystyrene etc. For example, 25 µm (0.001") of SARAN provides a barrier equivalent to about 125 µm (0.005") of nitrile barrier resins, 250 µm (0.010") of nylon, 1000 µm (0.040") of rigid PVC, and over 25000 µm (1.0") of polyethylene, polypropylene or polystyrene.

Table 1

| Permeability of Low Barrier Polymers | | | |
|---|---|---|---|
| Polymer | Oxygen[a] | Carbon dioxide[a] | Moisture vapour[b] |
| plasticized PVC polypropylene | 6-400 | 20-600 | 25-188 |
| cast | 30-52 | 100-160 | 1.175 |
| oriented polyethylene | 30-32 | 108 | 0.5-1.25 |

[a] mol/(m.s.Pa) x $10^{-17}$ at 23°C, 50% RH.
[b] mol/(m.s.Pa) x $10^{-15}$ at 23°C, 100% RH.

Table 1   (continued)

| Permeability of Low Barrier Polymers | | | |
|---|---|---|---|
| **Polymer** | **Oxygen[a]** | **Carbon dioxide[a]** | **Moisture vapour[b]** |
| low density | 52-96 | 200-540 | 2.5-3.75 |
| high density | 18-56 | | 0.76-1.0 |
| linear low density | 50-140 | 500 | 3.0 |
| polystyrene | 52 | | 17.5 |
| EVA,[c] 12% | 100-140 | 440-580 | 9.75 |
| polybutylene | 80 | 160 | 3.0 |

[a]mol/(m.s.Pa) x $10^{-17}$ at 23°C, 50% RH.
[b]mol/(m.s.Pa) x $10^{-15}$ at 23°C, 100% RH.
[c]Poly(ethylene-co-vinyl acetate)

Table 2

| Permeability of Good and High Barrier Polymers | | | |
|---|---|---|---|
| **Polymer** | **Oxygen[a]** | **Carbon dioxide[a]** | **Moisture vapour[b]** |
| Good barrier | | | |
| polyester, PET | 0.6-0.8 | 3-5 | 2.5-5.0 |
| polyamide, nylon-6 | 0.4-0.6 | 2-2.4 | 40-55 |
| poly(vinyl chloride), rigid | 1.0-4 | 4-10 | 12.5-188 |
| poly(vinyl fluoride) | 0.6 | 2.2 | 10 |
| High Barrier | | | |
| cellophane, dry | 0.1-0.16 | 0.2-1.2 | 1-335 |
| poly(vinylidene chloride)[c] | 0.16-0.22 | 0.76-1.2 | 0.5-1.5 |

[a]mol/(m.s.Pa) x $10^{-17}$ at 23°C, 50% RH.
[b]mol/(m.s.Pa) x $10^{-15}$ at 23°C, 100% RH.
[c]Saran Wrap (Dow Chemicals)

Table 3

| COMPARATIVE PERMEABILITIES OF POLYMERS | | | |
|---|---|---|---|
| | **Oxygen** | **Carbon Dioxide** | **Water Vapour** |
| Low Density Polyethylene | 1 | 1 | 1 |
| Silicone Rubber | x 100 | x 50 | x 50 |

Table 3 (continued)

| COMPARATIVE PERMEABILITIES OF POLYMERS | | | |
|---|---|---|---|
| | Oxygen | Carbon Dioxide | Water Vapour |
| Natural Rubber | x 4 | x 5 | x 15 |
| HDPE | x 0.5 | x 0.5 | x 0.4 |
| Oriented PP | x 0.3 | x 0.15 | x 0.5 |
| Polystyrene | x 0.5 | | x 5 |
| Butyl Rubber | x 0.2 | | x 1.5 |
| Polyamides (Nylon) | x 0.006 | x 0.006 | x 10 |
| Polyvinylidene Chloride (PVDC) | x 0.001 | x 0.001 | x 0.02 |
| Polyethylene Terephahalate (PET) | x 0.008 | 0.004 | x 0.05 |
| Cellulose Acetate (DRY) | - | x 0.001 | x 100 |
| Ethylene-vinyl Alcohol (EVOH) | x 0.0005 | x 0.001 | x 100 |
| Polycarbonate | | | x 1 |

The coverings of the invention should comprise at least one discrete layer, which may be considered a predominantly water-resistant layer, having a permeability with respect to water vapour of 0.005 to 10 $g.mm/m^2/24h$ at 23°C, 100% RH. Layers of this water vapour permeability will provide an adequate barrier to water transmission without needing to be excessively thick. However, a layer that has a water vapour permeability greater than about 10 $g.mm/m^2/24h$ at 23°C, 100% RH will ordinarily provide an insufficient barrier to water vapour transmission unless an exceptionally thick layer is employed. Such excessively thick layers are undesirable because they are expensive and heavy, are difficult to apply and, particularly in the case of field applied tapes, sleeves or films, tend to be excessively stiff and difficult to handle. More preferably the permeability with respect to water vapour is 0.005 to 7 $g.mm/mm^2/24h$ at 23°C, 100% R.H.

Similarly, coverings wherein the second or molecular barrier layer has an oxygen permeability greater than about 10 $cm^3.mm/m^2/24h.atm$ at 23°C, 50% RH or a carbon dioxide permeability greater than about 30 $cm^3.mm/m^2/24h.atm$ at 23°C, 50% RH may need layers of excessive thickness in order to provide an adequate barrier to oxygen and/or carbon dioxide. Preferably, the second layer has an oxygen permeability of 0.01 to 6 $cm^3/mm/m^2/24h.atm$ at 23°C, 50% RH and/or a carbon dioxide permeability of 0.01 to 15 $cm^3/mm/24h.atm$ at 23°C, 50% RH.

Secondly, the coverings of the invention are characterized by their aggregate transmission rates of water vapour, oxygen and/or carbon dioxide. Generally, the transmission rate of a given species through a given layer varies according to the permeability of the material of the layer and inversely with respect to the thickness of the layer. For any given multiple-layer covering and comprising layers of known permeability and known thickness, the transmission rates of each layer may be calculated theoretically and the sum total or aggregate transmission rate of the covering as a whole may be calculated using standard formulae well known to those skilled in the art.

Alternatively, the transmission rate of a given species though a given covering may be measured by performing testing under standard conditions. Such testing procedures are again well known to those skilled in the art, and include the ASTM Standard D1434 - Test Method For Determining Gas Characteristics of Plastic Film and Sheeting to Gases, ASTM Standard D3985 - Test Method for Oxygen Gas Transmission Through Plastic Film and Sheeting Using Coulometric Sensor and ASTM Standard E96 - Water Vapour Transmission For Materials 3mm or Less in Thickness.

In order to provide adequate exclusion of water vapour, oxygen and/or carbon dioxide, the covering of the invention in aggregate should have a water vapour transmission rate of 0.05 to 0.6 $g/m^2/24h$ at 23°C more preferably 0.05 to 0.4 $g/m^2/24h$ at 23°C, an oxygen transmission rate of 0.01 to 10 $cm^3/m^2/24h.atm$ at 23°C, more preferably 0.01 to 5 and still more preferably 0.01 to 1 $cm^3/m^2/24h.atm$ at 23°C, and/or a carbon dioxide transmission rate of 0.01

to 20 $cm^3/m^2/24h.atm$ at 23°C, more preferably 0.01 to 15 and still more preferably 0.01 to 10 $cm^3/m^2/24h.atm$ at 23°C.

As will be understood, the coverings of the invention may be used at ambient or at non-ambient, for example elevated temperatures. For the purposes of standardisation only, however, the materials have been characterized above and throughout the specification and claims by values of permeability and transmission rate as measured at 23°C.

The coverings of the invention may be used in various conditions of relative humidity, for example from dry desert conditions to under water. To the extent that the transmission rates of the materials may and often will vary with relative humidity, it is desired that the coverings of the invention are such that the aggregate transmission rates at all conditions of relative humidity from 0% RH to 100% RH should fall within the ranges indicated herein, and the ranges for transmission rates of the coverings taken in aggregate should be understood accordingly throughout the present specification and claims.

Table 4 below provides water vapour transmission and oxygen passage rates through various materials. The values are given as the volume in $cm^3$ for oxygen, and weight in grams for water per mm thickness over a meter square area over 24 hours at 23°C. It also provides the minimum coating thickness required to allow the passage of 10 $cm^3$ and 0.6 g of oxygen and water vapour respectively.

Table 4:

| Oxygen and Water Passage Rates | | | | |
|---|---|---|---|---|
| | $O_2$ PASSAGE cm³. mm/m²/24 h @ 23°C,50%R.H. | $H_2O$ PASSAGE g. mm/m²/24h @23°C, 90% R.H. | THICKNESS,mm TO ALLOW 10cm³ $O_2$ | THICKNESS,m m TO ALLOW 0.6g$H_2O$ |
| 1.Low density polyethylene | 188 cm³ | 0.46 g | 19.0 mm | 0.77 mm |
| 2.High density polyethylene | 88 | 0.15 | 8.8 | 0.25 |
| 3.Fusion Bonded Epoxy (FBE) (thermoset) | 3.8 | 1.0 | 0.38 | 1.7 |
| 4.Ethylene vinyl acetate (EVA) | 300 | 1.4 | 30.0 | 2.3 |
| 5.Polyamide 6 | 1.5 | 9.8 | 0.15(?) | 16.3 |
| 6.Polyester (PET) | 1.75 | 1.5 | 0.18 | 2.5 |
| 7.Polyvinyl fluoride (PVF) | 1.5 | 1.4 | 0.15 | 2.3 |
| 8.Polyvinylidene Chloride (PVDC) | 0.5 | 0.14 | 0.05 | 0.23 |
| 9.Ethylene Vinyl Alcohol Copolymer (EVOH) | 0.25 | 2.0 | 0.025 | 3.3 |
| 10.Polypropylene | 80 | 0.25 | 8.0 | 0.41 |
| 11.Polyvinyl chloride (rigid) | 6.25 | 2-26 | 0.63 | 3.3-43 |
| 12.Polybutylene | 200 | 0.42 | 20.0 | 0.7 |
| <u>Sources</u><br>1. Canadian Packaging, August 1979, P.17<br>2. Concise Encyclopedia of Polymer Science and Engineering, J.I. Kroschwite, Wiley Interscience Publication, p. 68<br>3. Permeability and Other Film Properties of Plastic and Elastomers, by Plastics Design Library, NY, 1995 | | | | |

An increasingly common mode of failure of steel structures such as bridge components and pipelines is what is known in the industry as stress corrosion cracking, and this has been related directly to the presence of carbon dioxide at the substrate interface.

The present invention in one aspect provides a covering that dramatically reduces the carbon dioxide ($CO_2$) passage through the covering and that can thereby control and retard the stress corrosion cracking phenomenon.

Currently used coating materials do not provide for control of stress corrosion cracking by restricting the $CO_2$ passage through the thermoplastic coatings. The traditional materials used as coatings for general corrosion prevention are specifically geared to keeping the water out. These thermoplastic coatings include polyethylene, polypropylene, ethylene vinyl acetate, and these are known to have extremely high passage rates of carbon dioxide.

For example, low density polyethylene allows a $CO_2$ passage of 500 - 1350 $cm^3.mm/m^2/24\,h.atm$ at $23°C$, 50% R.H., while the high density polyethylene is little better at 100 - 250$cm^3$.

In one aspect of the present invention, an effective coating against stress corrosion cracking is characterized by a maximum $CO_2$ passage of 20.0 $cm^2/m^2/24h.atm$ at $23°C$, 50% R.H., regardless of the thickness of the type of the coating material.

This criteria of 20.0 $cm^3$ of $CO_2$ passage cannot be and is not met by any of traditional coating technologies known to the applicant. For example, low density polyethylene is used in the industry as a coating on corrodible substrates up to a maximum thickness of 4.0mm. Such coating allows $CO_2$ passage of up to 337 $cm^3$, far in excess of the above noted criteria of 20 $cm^3$. Conversely, in order for the said LDPE coating to meet the 20 $cm^3$ criteria, its thickness would have to be as much as 67.0mm (2.63"). Such thickness is impractical with current coating technology, as well as being cost prohibitive.

Table 5 below provides the $CO_2$ passage rate in volume ($cm^3$) through a 1.0 mm thick coating over a meter square area over 24 hours. It also presents the required thickness of various organic polymers to meet the set criteria of 20 $cm^3$.

Table 5

| Carbon Dioxide Passage Rates | | |
|---|---|---|
| MATERIAL | $CO_2$ PASSAGE RATE $cm^3.mm/m^2/$ 24h.atm @ $23°C$, 50% RH | THICKNESS,mm TO ALLOW 20$cm^3$ $CO_2$ |
| Low Density Polyethylene | 500 - 1350 cm | 25 - 67.5 mm |
| High Density Polyethylene | 100 - 250 | 5 - 12.5 |
| Polyester (PET) | 7.5-12.5 | 0.38-0.63 |
| Polyamide 6 | 4 | 0.2 |
| Polypropylene | 200 | 10.0 |
| EVA | 1100 | 55 |
| Poly Vinyl Fluoride | 4.2 | 0.21 |
| Ethylene Vinyl Alcohol (EVOH) | 0.5-3.0 | 0.025-0.15 |
| Polyvinylidene Chloride (PVDC) | 1.9-3.0 | 0.095-0.15 |
| Epoxy | 3.1 | 0.16 |
| Sources: 1. Canadian Packaging, August 1979, P. 17  2. Concise Encyclopedia of Polymer Science and Engineering, J.I. Kroschwite, Wiley Interscience Publication, p. 68  3. Permeability and Other Film Properties of Plastics and Elastomers, by Plastics Design Library, NY, 1995 | | |

Numerous configurations of the corrosion preventing coverings of the invention are possible. For example, the covering may be applied as a factory applied coating to a corrodible metal substrate, for example pipe, metal poles and posts and railings. As noted above, conventional coatings primarily comprise a water-resistant coating, and such coatings and the procedures for producing them are well known to those skilled in the art and need not be described in detail herein. The modifications to such coatings and to their procedures for production in order to incorporate a second or molecular barrier layer providing the oxygen and/or carbon dioxide permeabilities and the aggregate oxygen and carbon dioxide transmission rates required by the coverings of the invention, as well as any modification necessary to achieve a desired water vapour permeability and aggregate water vapour transmission rate will likewise be readily apparent to those skilled in the art, given the teachings of the present invention and need not be described in detail herein.

Typically, coatings according to the present invention comprises a water-resistant layer comprising for example a polyolefin such as polyethylene, polypropylene and their derivatives such as poly(ethylene-co-vinyl acetate), poly(propylene-co-maleic anhydride), or compounds thereof, and a second or molecular barrier layer, and optionally one bonding layer promoting bonding of the coating to the substrate and/or of the water-resistant layer to the second or molecular barrier layer. Such bonding layer may, for example, comprise one or more of adhesive, primer, epoxy, polyurethane, sealant and filler material. The layers of the coating are each firmly bonded or fused to the or each adjacent layer and optionally to the substrate.

Preferably the second or molecular barrier layer is a thermoplastic. While the use of thermoset organic polymers, such as epoxy, for the second layer is possible, it is not preferred, since epoxy and similar two part thermoset resins require specific stoichiometric chemistry and careful proportioning, mixing and application as powders or liquids. The preferred materials include thermoplastics, such as polyvinylidene chloride, hydrolyzed ethylene-vinyl acetate copolymer, nitrile copolymer, rigid PVC, polyamide, polyester, polyvinyl fluoride, ethylene vinyl alcohol, cellophane, polybutylene butyl rubber fluoropolymers and polyvinyl alcohol. The second layer may also comprise silcon-oxide barrier coating materials.

Typically, following generally conventional factory applied coating procedures, raw polymeric resins, compounds and additives are converted into the multilayer coating and applied on the corrodible substrate using preferably thermoplastic conversion processes such as extrusion, sintering, adhesive coating etc. If desired, an already converted product such as a self-supporting film may be incorporated into the multi-component coating.

The coverings of the invention may also be employed in the form of field applied coatings such as, for example self supporting cold applied tapes, heat shrink tapes and sleeves, wrap-around sleeves or tubular film applied to a corrodible substrate as well as liquid paint which is allowed to solidify and/or as a powder which is fused, for example is sintered on or flame sprayed, to form a coherent layer or layers and allowed to cool.

Such field applied coatings, which may be applied in the field to such diverse items as lamp posts, fire hydrants, pipeline joints, valves and fittings, pipes, bridge structures, pilings etc. are also well known to those skilled in the art. As noted above, conventional field applied coatings generally consist primarily of a polyolefin water-resistant layer with or without a functional coating such as adhesive, sealant, or primer that may be used to improve adhesion to the substrate.

Examples of typical field applied coatings include the following:

1. Cold applied tapes comprising usually a polyolefinic backing covered with an adhesive. This is wrapped around the substrate under tension. A separate primer may or may not be used to improve adhesion properties.

2. Heat shrink sleeves comprised usually of a crosslinked polyolefinic backing covered with adhesive. These are somewhat loosely fitted over the substrate, and upon heating, they recover to conform to the substrate.

3. Polymeric tubular film applied over a cylindrical substrate, for example a 0.25 mm thick polyethylene tube slid over a pipe, and the ends are sealed to keep water out and thereby slow down corrosion.

4. Liquid paints such as two part epoxy, polyurethane, polyester etc. which are brushed on or sprayed on a corrodible substrate.

5. Powders such as fusion bonded epoxy, or certain thermoplastic polymers which are sintered or are flame sprayed on a corrodible substrate.

The modifications to known coatings required to provide them in the form of corrosion preventing coverings in accordance with the invention, and to the procedures for their production and application are likewise well within the capabilities of those skilled in the art and need not be described in detail herein.

Briefly, in the case of cold applied tapes and heat shrink tapes and sleeves, an additional layer of molecular barrier material may be incorporated in the tapes and sleeves in order to provide a covering material in accordance with the invention exhibiting reduced passage of oxygen and/or carbon dioxide therethrough.

In the use of tubular films, currently, 0.2 mm low or medium density polyethylene film, for example, in tubular form is inserted over a corrodible substrate such as ductile iron pipe in order to keep water out. These tubes are usually somewhat loosefitting, and there is usually a gap under the film. During handling and burial, the film tends to get damaged and the water can get in. Therefore, while this is a widespread practice, it is not very effective from the point of view of corrosion protection.

Such polyethylene film may be colaminated using conventional techniques with a film such as PVDC or nylon of predetermined thickness in order to produce a covering in accordance with the invention in order to reduce the oxygen and/or carbon dioxide ingress. In the event the film is punctured, the covering material of the invention limits the oxygen passage, in areas adjacent to as well as remote from the punctures, thus inhibiting the corrosion process.

In the case of liquid or paint-like coatings a field applied coating in accordance with the invention can be produced by applying a tape with or without an adhesive after the liquid coating has been applied. Such tape, having the required $O_2$ and/or $CO_2$ and $H_2O$ limiting properties may be generally as described above in connection with cold applied and heat shrink tapes.

In the case of powder-applied coatings, as the powders of different materials such as epoxy, hot melt adhesive (for example EVA based) polyethylene etc. are successively fusion bonded or heat sintered on, one of the component layers is formed generally in conventional manner from, for example, EVOH (ethylene vinyl alcohol) powder to form a layer of the required thickness to provide the required limited oxygen and/or carbon dioxide passage.

It may be noted that in the preferred form of the invention at least the second or molecular barrier layer of the covering is a homogeneous organic polymeric coating substantially free from inorganic inclusions such as fibrous reinforcement, filler particles or the like that may tend to impair the integrity of the material as a molecular barrier so that it is incapable of limiting $O_2$ or $CO_2$ passage to the extent required for the purposes of the present invention. However this does not exclude the use within such layer of inclusions that may enhance the integrity of the material as a molecular barrier.

While the above description has provided ample information to enable one of ordinary skill in the art to make and use protective coverings in accordance with the invention, for the avoidance of doubt some detailed Examples and Comparative Examples will be given.

EXAMPLES

Examples 1 to 4 and Comparative Examples 1 to 7

Two specific series of Examples were carried out:

1. Sealed substrates. (Comparative Examples 1 to 6 and Examples 1 to 3).

2. Sealed substrate but with a puncture in the coating. (Comparative Example 7 and Example 4).
NOTE: "Examples" - refers to coatings fabricated in accordance with the invention, while "Comparative Examples" refer to conventional coatings.
The aim of these Examples was to illustrate the effect of different coating types on the corrosion rate of steel substrates. The materials used for coatings were as follows:

a. Low density polyethylene, thickness 0.05 mm (LDPE/0.05)

b. Low density polyethylene, thickness 1.0 mm (LDPE/1.0)

c. Low density polyethylene, 0.05 mm colaminated with ethylene vinyl alcohol copolymer (EVOH) film of 0.025 mm for a total thickness of 0.075 mm.

Conditions:

SEALED SUBSTRATES

Two separate sets of Examples were carried out on:

(i) 50mm pipe, steel type 1018

a) with no treatment to the substrate (Comparative Examples 1 and 2 and Example 1)

b) with electrolyte on substrate (Comparative Examples 3 and 4 and Example 2)

(ii) on 100 mm $\times$ 150 mm coupons, steel type 1018 (Comparative Examples 5 and 6 and Example 3)
The pipes and coupons were grit blasted with GL40 grit to white metal.

Pipe

A first set of pipes were covered and sealed with the coating materials immediately after grit blasting with no treatments to the surface. The seal was affected using mastics and epoxy adhesives.

A second set up pipes were dipped into a 3% sodium chloride solution and immediately covered and sealed with the coating materials. These specimens simulated a blister or a void under the coating with and without the presence of electrolyte.

These sealed pipes were placed in containers filled with 3% sodium chloride solution.

Stainless steel electrodes were placed in the containers, and 0.5 volts was applied to transform the covered pipes into anodes, and the stainless steel electrodes into cathodes. This facilitated formation of accelerated corrosion cells, the corrosion being induced in the test specimens with the coverings on it.

Coupons

Immediately after blasting, a stress point was created on the steel coupon with a hammer blow on a 5mm key punch. A drop of 3% sodium chloride solution was placed on the stress point. Then the coupon was covered and sealed with the coating materials, and left at ambient conditions, 65% R.H. and 23°C.

Conditions:

SEALED SUBSTRATE WITH PUNCTURED COATING (Comparative Example 7 and Example 4)

These Examples assessed the corrosion rate when the electrolyte is allowed to freely penetrate under the coating material. It also simulates a holiday in the coating on a pipe. The set up was identical to that described above for the sealed pipes. After grit blasting, the pipe was covered and sealed without any treatment to the pipe surface. A 5mm hole was punched in the coating material. Upon immersion in the 3% sodium chloride solution container, the gap between the coating material and the pipe was quickly filled with the electrolyte, creating a ready pathway for oxygen to travel to the entire pipe surface and induce rapid corrosion.

Evaluation of Results

The samples were examined after 2 weeks and 10 weeks for general surface corrosion and pitting. A qualitative rating scale of 0 to 10 was used to quantify the extent of corrosion as follows:

0 =   No corrosion at all.

10 =   Heavy surface corrosion with brown ferric oxide formation and/or numerous deep pitting.

R =   General rust, P = Pitting

| Sealed Pipe with no Surface Treatment | | | | |
|---|---|---|---|---|
| Ex. No | Coating Material | Rating @ 2 Weeks | Rating @ 10 weeks | Comments |
| Comparative 1 | LDPE/0.05 mm | 2.0 | 3.0 | Very thick layer of dark brown rust in patches, and progressed steadily to 10 weeks. |
| Comparative 2 | LDPE/1.0m m | 1.0 | 1.5 | Visible amount of patchy dark brown rust, increased slightly over 10 weeks. |
| 1 | LDPE/ EVOH/ 0.075mm | 0 | 1.0 | No visible rust after 2 weeks, but some superficial brown patches appeared at 10 weeks. |

| Sealed Pipe with Electrolyte on Pipe Surface | | | | |
|---|---|---|---|---|
| Ex. No. | Coating Material | Rating @ 2 Weeks | Rating @ 10 weeks | Comments |
| Comparative 3 | LDPE/0.05mm | R8 | R10 | At 2 weeks, there was a thick heavy layer of bright brown rust and some (≈20%) blackish green rust on entire pie, and this progressed to 10 weeks with heavy corrosion formation becoming orange brown ferric oxide. |
| Comparative 4 | LDPE/1.0mm | R5 | R7 | The entire pipe surface was covered with a light layer of brown rust and some blackish green after 2 weeks, and those formations increased to become a heavy layer after 10 weeks. |
| 2 | LDPE/EVOH/0 .075mm | R3.5 | R5.0 | At 2 weeks, there was a fine surface layer cf blackish green rust, and turned little heavier black formation after 10 weeks There was no brown rust at all, indicating corrosion reaction getting arrested at the blackish green ferrous oxide due to limited oxygen supply. |

| Ex. No. | | COUPONS | | |
|---|---|---|---|---|
| Comparative 5 | LDPE/0.05mm | R3.0 P4.5 | R4 P6 | Within hours there was evidence of rust formation. At 2 weeks, there was significant brown rust and fairly heavy pitting around the stress point. The pitting continued to increase over the 10 week period, while rust spot remained unchanged. An area in the radius 2 cm from the stress point was saturated with pits. |
| Comparative 6 | LDPE/1.0mm | R1.5 P0.5 | R4 P2 | At 2 weeks, brown rust formation and pitting was fairly evident around the stress point, and after 10 weeks, there was a significant increase in the dark brown rust and pitting extending to a 2 cm radius. |

(continued)

| Ex. No. | COUPONS | | | |
|---|---|---|---|---|
| 3 | LDPE/EVOH/0. 075mm | R1.0 P1.0 | R1.5 P1.5 | At 2 weeks, there was a very slight superficial rust formation and pitting beyond the stress point, and this remained almost unchanged after 10 weeks. This indicates that the initial corrosion was due to the entrapped air, and once this was exhausted, and no fresh supply of oxygen was forthcoming, the corrosion process was arrested. |

| PUNCTURED COATING ON SEALED PIPE | | | | |
|---|---|---|---|---|
| Ex. No. | COMMENTS | | | |
| Comparative 7 | LDPE/0.05mm | R8.0 | R10.0 | With the LDPE/0.05, the pipe was heavily corroded with brown rust within 2 weeks, and only got worse with time. |
| 4 | LDPE/EVOH/0. 075mm | R3.5 | R 5.0 | However, with the LDPE/EVOH/0.075 covering, the corrosion formation was much less heavy and was entirely blackish green after 2 weeks, and basically remained so after 10 weeks. Surprisingly, oxygen transmission through the coating material was the key determining factor, since the corrosion formation in areas remote from holiday was same as near the holiday. |

Discussion of Comparative Examples 1 to 7 and Examples 1 to 4

1. A presence of even 0.025mm film of EVOH in the coating material significantly retards the corrosion process, and showed significantly better performance than the 0.05mm and 1.0mm LDPE.
The basic difference in the characteristics of the LDPE and EVOH materials is that LDPE allows by a factor of 750 times more oxygen transmission through it than does an EVOH film of the same thickness and size.

2. The experiment with the punctured coating showed brown rust colour under the LDPE covering, while under the EVOH covering the rust colour was green-black, i.e. ferrous-oxide, which is the less oxidized state of iron oxide. This clearly indicated that despite the direct dissolved oxygen pathway through the puncture, the corrosion process, in the areas adjacent to as well as remote from the hole, was being driven by the oxygen passage through the film.

3. By limiting the oxygen passage by the use of appropriate coating materials having low oxygen permeabilities, the corrosion of substrates can be controlled and retarded.

Factory Applied Coatings

Example 5

A metal lamp post, 150mm diameter, is first grit blasted. An adhesive layer of maleic anhydride polyethylene (Fusabond EMB 158D, DuPont) is extruded in the thickness of 0.25mm onto the prepared surface. This is followed by an extrusion of 0.05mm of ethylene vinyl alcohol film (EVOH). The coating is finished by a final extrusion of an external layer of high density polyethylene at 0.5mm thickness. The oxygen and water vapour passages through the coating is as follows:

| | O$_2$Passage cm$^3$/m$^2$/24h.atm | H$_2$O Passage g/m$^2$/24h.atm |
|---|---|---|
| 0.25mm Fusabond EMB 158D | >750 | >1.84 |
| 0.05mm EVOH (Selar-OH BX220, DuPont) | 5 | 40 |
| 0.5mm HDPE Sclair 35BP, (Nova Chemical) | 175 | 0.3 |

This is an effective coating for corrosion prevention. The oxygen limiting layer is the EVOH, which keeps the O$_2$ passage at 5cm$^3$, well below the 10cm$^3$ limit, while the HDPE limits the H$_2$O passage to well below the 0.6g limit. The grafted polyethylene adhesive is used only as a bonding agent.

Example 6

A coating on a pipe, 8" (20,3 cm) diameter. After grit blasting, a 0.15mm layer of fusion bonded epoxy (D1003LD, Valspar) is applied to the surface to provide good cathodic disbondment resistance. This is followed by a 0.5mm adhesive layer of maleic anhydride grafted polyethylene (Fusabond EMB 158, DuPont).
This is covered with polyvinylidene chloride (PVDC) in the thickness of 0.05mm and then a 1.0mm external jacket of low density polyethylene is applied on top.
In this example, the rate determining components are PVDC and polyethylene for the oxygen and water vapour respectively. The contribution of the other components is negligible with respect to those properties.

| | O$^2$ Passage cm$^3$/m/24h | H$_2$O Passage g/m$^2$/24h |
|---|---|---|
| 0.15mm epoxy (D1003LD, Valspar) | 25 | 6.6 |
| 0.5mm Fusabond EMB158, DuPont | >375 | >0.9 |
| 0.05mm PVDC (Saran 313, Dow Chemical) | 10 | 2.3 |
| 1.0mm LDPE (Novacor LF0219A, Nova Chemicals) | 188 | 0.46 |

Example 7 - Heat Shrink Sleeve and Tape

For a heat shrink sleeve, a 1.0mm thick crosslinked polyethylene sheet (Novacor LF0219A, Nova Chemicals) was stretched by 30%. A 0.10mm layer of adhesive (Type A12, Canusa, Div. of Shaw Industries) was applied to it immediately followed by lamination of 0.05mm polyvinylidene chloride (PVDC) film (Saran 18L, Dow Chemical). Then the adhesive layer (Type A12) of 1.0mm was applied over the PVDC layer. The sleeve then was used in conventional manner. The 1.0mm of polyethylene and 1.0mm adhesive are more than adequate to keep water vapour passage below 0.6g, while the 0.05mm of PVDC kept the oxygen passage well below 10 cm$^3$.
The same approach can be taken with the production of cold applied tape. The preferred method is to coextrude the PVDC film with polyethylene backing, and then apply the adhesive to the PVDC layer.

Example 8 - Tubular Film

A tri-lamination of HDPE/PVDC/HDPE in thicknesses of 0.016mm/0.008mm/0.016mm respectively is produced in a tubular form in size to fit a given diameter pipe. In this Example a 320mm diameter tube is produced to fit over a 300mm diameter pipe.

| | |
|---|---|
| 0.016mm | High Density Polyethylene, Grade 62020 (Dow Chemicals) |
| 0.008mm | PVDC Film (Saran 18L, Dow Chemicals) |
| 0.016mm | High Density Polyethylene, Grade 62020 (Dow Chemicals) |

In a modification, the film is produced in a tape form of 300mm width, and this is spirally wound onto the pipe with a suitable overlap, and overlaps are sealed or glued to prevent water ingress.

In a further modification, the material is crosslinked and has some heat recoverability, so that after bringing the film over the substrate, it can be heat shrunk down to obtain better conformance to the substrate.

It will be appreciated the trilaminate design and material types given above are for illustration only. The key point here is the limiting oxygen passage to 10cm$^3$ and the limiting of water vapour passage to 0.6g.

STRESS CORROSION CRACKING PREVENTING COATINGS

Example 9

A traditional cold applied tape installed on a mechanical coupling on a 300mm steel pipe. The tape is produced in traditional configuration, except that a layer of ethylene vinyl alcohol copolymer (EVOH) is incorporated into the tape. The configuration of tape is as follows. The extruded 0.75mm low density polyethylene backing is colaminated with 0.05mm EVOH film, and then a 0.5mm butyl mastic adhesive is coated on the EVOH layer. The tape is installed on the coupling in the traditional manner. After grit blasting, a coat of primer is brushed on and allowed to dry. Then, the tape is wrapped around the coupling carefully applying tension to provide conformance until the entire coupling is covered. The configuration of the coating and the respective $CO_2$ passage rates are as follows:

|  | $CO_2$ Passage cm$^3$/m$^2$/24.atm |
|---|---|
| 0.07 primer | very high |
| 0.50mm butyl mastic | very high |
| 0.05mm EVOH | 20 cm$^3$ |
| 0.75mm LDPE | 666 cm$^3$ |

The traditional materials have virtually little contribution in restricting the $CO_2$ passage, but by mere presence of 0.05mm EVOH in a 1.32mm traditional tape, the $CO_2$ passage is limited to the set criteria of 20cm$^3$/m$^2$/24 hours.

**Claims**

1. A corrosion preventing covering comprising :
   at least two discrete organic polymeric layers directly or indirectly united together and wherein:

   [a] a first of said layers has a water vapour permeability of 0.005 to 10g.mm/m$^2$/24h at 23°C, 100% RH;
   [b] a second of said layers has:

   (i) an oxygen permeability of 0.01 to 10cm$^3$.mm/m$^2$/24h.atm at 23°C, 50% RH and/or
   (ii) a carbon dioxide permeability of 0.01 to 30cm$^3$.mm/m$^2$/24h.atm at 23°C, 50% RH; and said covering having in aggregate:

   [c] a water vapour transmission rate of 0.05 to 0.6g/m$^2$/24h at 23°C; and
   [d] (i) an oxygen transmission rate of 0.01 to 10cm$^3$/m$^2$/24h.atm at 23°C and/or (ii) a carbon dioxide transmission rate of 0.01 to 20cm$^3$/m$^2$/24h.atm at 23°C.

2. A covering according to claim 1 wherein one or more or all of the following features [e] to [j] applies :

   [e] said water vapour permeability is 0.005 to 7g.mm/m$^2$/24h at 23°C, 100% RH;
   [f] said oxygen permeability is 0.01 to 6cm$^3$/m$^2$/24h.atm at 23°C, 50% RH;
   [g] said carbon dioxide permability is 0.01 to 15cm$^3$.mm/m$^2$/24h.atm at 23°C, 50% RH;
   [h] said water vapour transmission rate is 0.05 to 0.4g/m$^2$/24h at 23°C;
   [i] said oxygen transmission rate is 0.01 to 5 cm$^3$/m$^2$/24h.atm at 23°C;
   [j] said carbon dioxide transmission rate is 0.01 to 15, more preferably 0.01 to 10 cm$^3$/m$^2$/24h.atm at 23°C.

3. A covering according to claim 2 wherein said oxygen transmission rate [i] is 0.01 to 1 cm$^3$/m$^2$/24h.atm at 23°C.

**EP 0 882 101 B1**

4. A covering according to claim 2 or 3 wherein said carbon dioxide transmission rate [j] is 0.01 to 10 $cm^3/m^2/24h$. atm at 23°C.

5. A corrosion preventing covering according to any preceding claim wherein the first layer comprises polyolefin or derivative thereof.

6. A corrosion preventing covering according to any preceding claim wherein the second layer comprises one or more of polyvinylidene chloride, hydrolyzed ethylene-vinyl acetate copolymer, nitrile copolymer, rigid PVC, polyamide, polyester, polyvinyl fluoride, ethylene vinyl alcohol, cellophane, polybutylene butyl rubber, fluoropolymer, polyvinylalcohol, and silicon-oxide coated barrier coating materials.

7. A corrosion preventing covering according to any preceding claim wherein one or both of said first and second layers is thermoplastic.

8. A corrosion preventing covering according to any preceding claim having a bonding layer for promoting bonding of the coating to the substrate to be protected.

9. A covering according to claim 8 wherein said bonding layer comprise one or more of adhesive, primer, epoxy, polyurethane, sealant and filler material.

10. A corrosion preventing covering according to any preceding claim comprising a self-supporting multiple layer tape, sleeve, wrap-around sleeve or tubular film.

11. A covering according to claim 10 which is heat shrinkable.

12. A corrosion preventing covering according to any preceding claim wherein said layers are applied to a substrate as liquid paint which is allowed to cure or solidify and/or as powder which is fused to form a coherent layer or layers and allowed to cool.

13. A corrosion preventing covering according to any preceding claim wherein at least said second layer is substantially free from inorganic inclusions that impair the integrity of said layer as a molecular barrier.

14. A corrosion preventing covering according to any preceding claim when applied on a corrodible substrate.

**Patentansprüche**

1. Korrosionsschutzbelag, umfassend:
   wenigstens zwei diskrete organische Polymerschichten, die direkt oder indirekt miteinander verbunden sind, und wobei:

   [a] eine erste der genannten Schichten eine Wasserdampfdurchlässigkeit zwischen 0,005 und 10 $g.mm/m^2/24h$ bei 23°C, 100% relative Feuchte aufweist;
   [b] eine zweite der genannten Schichten folgendes aufweist:

   (i) eine Sauerstoffdurchlässigkeit zwischen 0,01 und 10 $cm^3.mm/m^2/24h.atm$ bei 23°C, 50% relative Feuchte und/oder
   (ii) eine Kohlendioxiddurchlässigkeit zwischen 0,01 und 30 $cm^3.mm/m^2/24h.atm$ bei 23°C, 50% relative Feuchte; und wobei der genannte Belag insgesamt folgendes umfaßt:

   [c] eine Wasserdampftransmissionsrate zwischen 0,05 und 0,6 $g/m^2/24h$ bei 23°C; und
   [d] (i) eine Sauerstofftransmissionsrate zwischen 0,01 und 10 $cm^3/m^2/24h.atm$ bei 23°C und/oder (ii) eine Kohlendioxidtransmissionsrate zwischen 0,01 und 20 $cm^3/m^2/24h.atm$ bei 23°C.

2. Belag nach Anspruch 1, auf den eines oder mehrere oder alle der folgenden Merkmale [e] bis [j] zutrifft/zutreffen:

   [e] die genannte Wasserdampfdurchlässigkeit beträgt 0,005 bis 7 $g.mm/m^2/24h$ bei 23°C, 100% relative Feuchte;

[f] die genannte Sauerstoffdurchlässigkeit beträgt 0,01 bis 6 $cm^3/m^2$/24h.atm bei 23°C, 50% relative Feuchte;
[g] die genannte Kohlendioxiddurchlässigkeit beträgt 0,01 bis 15 $cm^3$.mm/$m^2$/24h.atm bei 23°C, 50% relative Feuchte;
[h] die genannte Wasserdampftransmissionsrate beträgt 0,05 bis 0,4 g/$m^2$/24h bei 23°C;
[i] die genannte Sauerstofftransmissionsrate beträgt 0,01 bis 5 $cm^3/m^2$/24h.atm bei 23°C;
[j] die genannte Kohlendioxidtransmissionsrate beträgt 0,01 bis 15, bevorzugter 0,01 bis 10 $cm^3/m^2$/24h.atm bei 23°C.

**3.** Belag nach Anspruch 2, bei dem die genannte Sauerstofftransmissionsrate [i] 0,01 bis 1 $cm^3/m^2$/24h.atm bei 23°C beträgt.

**4.** Belag nach Anspruch 2 oder 3, bei dem die genannte Kohlendioxidtransmissionsrate [j] 0,01 bis 10 $cm^3/m^2$/24h. atm bei 23°C beträgt.

**5.** Korrosionsschutzbelag nach einem der vorherigen Ansprüche, bei dem die erste Schicht Polyolefin oder sein Derivat umfaßt.

**6.** Korrosionsschutzbelag nach einem der vorherigen Ansprüche, bei dem die zweite Schicht einen oder mehrere der folgenden Bestandteile umfaßt: Polyvinylidenchlorid, hydrolysiertes Ethylen-Vinylacetat-Copolymer, Nitril-Copolymer, Hart-PVC, Polyamid, Polyester, Polyvinylfluorid, Ethylenvinylalkohol, Zellglas, Polybutylenbutylkautschuk, Fluorpolymer, Polyvinylalkohol und siliziumoxidbeschichtete Sperrbeschichtungsmaterialien.

**7.** Korrosionsschutzbelag nach einem der vorherigen Ansprüche, bei dem die erste und/oder die zweite genannte Schicht Thermoplast ist/sind.

**8.** Korrosionsschutzbelag nach einem der vorherigen Ansprüche mit einer Bindeschicht, um die Bindung der Beschichtung am zu schützenden Substrat zu fördern.

**9.** Belag nach Anspruch 8, bei dem die genannte Bindeschicht einen oder mehrere der folgenden Bestandteile umfaßt: Klebstoff, Primer, Epoxidharz, Polyurethan, Dichtungsstoff und Füllmaterial.

**10.** Korrosionsschutzbelag nach einem der vorherigen Ansprüche, umfassend ein/e trägerlose/trägerloses mehrlagige/mehrlagiges Band, Hülle, Wickelhülle oder röhrenförmige Folie.

**11.** Belag nach Anspruch 10, der wärmeschrumpfbar ist.

**12.** Korrosionsschutzbelag nach einem der vorherigen Ansprüche, bei dem die genannten Schichten auf ein Substrat als flüssige Farbe, die härten oder verfestigen gelassen wird, und/oder als Pulver aufgebracht werden, das geschmolzen wird, um (eine) kohärente Schicht oder Schichten zu bilden, und abkühlen gelassen wird.

**13.** Korrosionsschutzbelag nach einem der vorherigen Ansprüche, bei dem wenigstens die genannte zweite Schicht im wesentlichen frei von anorganischen Einschlüssen ist, die die Integrität der genannten Schicht als molekulare Barriere beeinträchtigen.

**14.** Korrosionsschutzbelag nach einem der vorherigen Ansprüche, wenn auf ein korrosionsanfälliges Substrat aufgebracht.

## Revendications

**1.** Recouvrement anti-corrosion comprenant:
au moins deux couches polymères organiques discrètes directement ou indirectement jointes ensemble et dans lequel:

[a] une première desdites couches a une perméabilité à la vapeur d'eau de 0,005 à 10 g.mm/$m^2$/24 h à 23°C, 100% HR;
[b] une deuxième desdites couches a:

(i) une perméabilité à l'oxygène de 0,01 à 10 $cm^3$.mm/m$^2$/24 h. atm à 23°C, 50% HR et/ou

(ii) une perméabilité au dioxyde de carbone de 0,01 à 30 $cm^3$.mm/m$^2$/24 h. atm à 23°C, 50% HR; et ledit recouvrement ayant dans l'ensemble:

[c] un taux de transmission de vapeur d'eau de 0,05 à 0,6 g/m$^2$/24 h à 23°C; et

[d] (i) un taux de transmission d'oxygène de 0,01 à 10 $cm^3$/m$^2$/24. h. atm à 23°C et/ou (ii) un taux de transmission de dioxyde de carbone de 0,01 à 20 $cm^3$/m$^2$/24. h. atm à 23°C.

2. Recouvrement selon la revendication 1 dans lequel l'une ou plusieurs ou toutes les caractéristiques suivantes [e] à [j] s'appliquent:

[e] ladite perméabilité à la vapeur d'eau est de 0,005 à 7 g.mm/m$^2$/24 h à 23°C, 100% HR;

[f] ladite perméabilité à l'oxygène est de 0,01 à 6 $cm^3$/m$^2$/24 h. atm à 23°C, 50% HR;

[g] ladite perméabilité au dioxyde de carbone est de 0,01 à 15 $cm^3$.mm/m$^2$/24 h. atm à 23°C, 50% HR;

[h] ledit taux de transmission de vapeur d'eau est de 0,05 à 0,4 g/m$^2$/24 h à 23°C;

[i] ledit taux de transmission d'oxygène est de 0,01 à 5 $cm^3$/m$^2$/24 h. atm à 23°C;

[j] ledit taux de transmission de dioxyde de carbone est de 0,01 à 15, de préférence de 0,01 à 10 $cm^3$/m$^2$/24 h. atm à 23°C.

3. Recouvrement selon la revendication 2 dans lequel ledit taux de transmission d'oxygène [i] est de 0,01 à 1 $cm^3$/m$^2$/24 h. atm à 23°C.

4. Recouvrement selon la revendication 2 ou 3 dans lequel ledit taux de transmission de dioxyde de carbone [j] est de 0,01 à 10 $cm^3$/m$^2$/24 h. atm à 23°C.

5. Recouvrement anti-corrosion selon l'une quelconque des revendications précédentes dans lequel la première couche comprend une polyoléfine ou un dérivé de celle-ci.

6. Recouvrement anti-corrosion selon l'une quelconque des revendications précédentes dans lequel la deuxième couche comprend l'un ou plusieurs de chlorure de polyvinylidène, copolymère éthylène-acétate de vinyle hydrolisé, copolymère de nitrile, PVC rigide, polyamide, de polyester, fluorure de polyvinyle, alcool éthylénique vinylique, cellophane, caoutchouc de polybutylène-butyle, fluoropolymère, alcool polyvinylique, et de matières de revêtement de protection revêtue d'oxyde de silicium.

7. Recouvrement anti-corrosion selon l'une quelconque des revendications précédentes dans lequel une ou les deux dites première et deuxième couches sont thermoplastiques.

8. Recouvrement anti-corrosion selon l'une quelconque des revendications précédentes ayant une couche d'adhésion pour favoriser l'adhésion du revêtement au substrat à protéger.

9. Recouvrement selon la revendication 8 dans lequel ladite couche d'adhésion comprend un ou plusieurs d'un adhésif, apprêt, époxy, polyuréthane, matière d'étanchéité et de remplissage.

10. Recouvrement anti-corrosion selon l'une quelconque des revendications précédentes comprenant un ruban, un fourreau, un fourreau enveloppant ou un film tubulaire autoporteur à couches multiples.

11. Recouvrement selon la revendication 10 qui est thermo-rétrécissable.

12. Recouvrement anti-corrosion selon l'une quelconque des revendications précédentes dans lequel lesdites couches sont appliquées à un substrat en tant que peinture liquide qu'on laisse durcir ou se solidifier et/ou en tant que poudre qui est fondue pour former une couche ou des couches cohérentes et qu'on laisse refroidir.

13. Recouvrement anti-corrosion selon l'une quelconque des revendications précédentes dans lequel au moins ladite deuxième couche est sensiblement sans inclusions inorganiques qui compromettent l'intégrité de ladite couche en tant qu'une protection moléculaire.

14. Recouvrement anti-corrosion selon l'une quelconque des revendications précédentes lorsqu'appliqué sur un substrat sensible à la corrosion.